(19) Europäisches Patentamt
European Patent Office
Office européen des brevets

(11) **EP 2 884 461 A1**

(12) **EUROPEAN PATENT APPLICATION**

(43) Date of publication:
**17.06.2015 Bulletin 2015/25**

(51) Int Cl.:
***G06T 7/20*** *(2006.01)*

(21) Application number: **13197557.5**

(22) Date of filing: **16.12.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **THALES NEDERLAND B.V.**
**7550 GD Hengelo (NL)**

(72) Inventors:
• **Kampman, Joris E.J.J**
**7551BS HENGELO (NL)**
• **Köhler, Olaf O.M.**
**48565 STEINFURT (DE)**

(74) Representative: **Hnich-Gasri, Naïma et al**
**Marks & Clerk France**
**Immeuble Visium**
**22, avenue Aristide Briand**
**94117 Arcueil Cedex (FR)**

(54) **A video enhancing device and method**

(57) The invention provides a method for enhancing video display of a video surveillance system, comprising :
a. receiving a first video image $I_{n-1}$ and a second video image $I_n$ corresponding to a previous scan n-1 and a current scan n of said video surveillance system,
b. determining a backwards displacement vector $D_n$ from image $I_n$ associating with scan n to image $I_{n-1}$ associated with scan n-1;
c. determining a predicted image $J_{n+1}$ for scan n+1 based on the backward displacement vector $D_n$ and on the image $I_n$ corresponding to the current scan n, the method further comprising displaying an image based on said predicted image.

LEGEND:
- — — → Backwards displacement (D)
- ——→ Predicted optical flow (P)
- ·····→ Flow fading vector (F)
- Measured image (I)
- Predicted next scan image (J)

**FIGURE 3**

**Description**

**Field of invention**

The invention generally relates to video processing, and particularly to a method and a device for enhancing radar video.

**Background art**

In many technological fields, there is a need for detecting specific objects (also referred to as "targets") and generating a video rendering of the detected targets and of the environment for "situational awareness".

In particular, radar systems are used to detect targets by transmitting a Radio Frequency (RF) signal with specific characteristics and receiving the emitted signal perturbed by the environment after reflection from the target in this environment. The transmitted RF signal can be bundled in a specific direction, either by using a particular antenna design or by signal processing (i.e., digital beamforming). A similar approach can be used for the received signal. Bundling the signals in specific directions results in a higher gain, which allows the detection of objects at larger ranges.

Signal and data processing, consisting of a plot extraction process (position, Doppler speed, Radar Cross Section estimation of a target) and a tracking process, is generally performed after reception of the radar signals to detect targets while ensuring robustness against interference and clutter signals. Every target is classified based on its properties such as Doppler speed, range, height and Radar Cross Section (RCS). As a result, a large and non-exclusive set of objects can be obtained in the environment. Radar operators generally need an overview of the clutter in the environment for situational awareness. However, data processing does not allow to efficiently distinguish low RCS and slow moving targets from stationary clutter. To be able to analyze the environment and all objects in it, the radar operators thus need to display the plots and tracks over a display video image which refreshes over time.

The display video represents the received signal strength at all ranges and all bearings to render a 2D projected image on the horizontal plane. An extraction process (also called "plot creation process") and a tracking process (also called "track creation process") are used to find and track moving objects from which the amplitude of the received signal is above certain thresholds. In most radar systems, objects that are substantially stationary are quickly deemed clutter and are therefore not tracked by the system. However, slow moving objects may be of particular interest for radar operators. Indeed, a surface object, such as for example a swimmer in the sea, might be missed as a wanted target, due to its characteristics not being tracked by the radar system. In this case, the radar operator must visually distinguish its radar video blips, the received signal strength at a certain range, and the bearing where a target is present from the clutter environment, which in the example of a swimmer can be the sea and waves.

From scan to scan, a radar signal from a specific object may be subject to large fluctuations due to a variety of causes from the environment, to the radar system and to the object itself. From scan to scan, a radar display video image thus fluctuates heavily, delivering a quite busy and flickering image to the radar operator. Discerning a small target in a highly fluctuating and noisy environment becomes therefore difficult.

This limitation is especially significant for surveillance radar systems which have scan times of one second or a few seconds. Accordingly, the refresh rate of the image hinders the operators' ability to distinguish small and slow moving targets from clutter and noise. This may be still emphasized by the eye strain which is due to the low image refresh rate.

A known approach to the problem of enhancing the display video refresh rate consists in coupling the processing results (i.e. plots and tracks) to the display video. By identifying which part of the display video image represents a target, the display video underlying the track update can be predicted and moved smoothly to the coordinates of the next predicted track update. The solution consisting of coupling track information to the display video presents a number of drawbacks so that very few radar systems resort to this approach and even keep the display video unprocessed and displayed at the low refresh rate.

A major limitation of this approach lies on the fact that the tracking is primarily designed for non-stationary objects (such as for example jets, airliner, missiles, shells) and is not optimized for low RCS and slow moving objects. As a result, these specific objects are not recognized and tracked.

Additionally, implementing a feedback loop from the tracking to the display video can only be done based on the premises that the display video can be predicted accurately from the tracking. However, in case of strong maneuvering targets or high noise conditions, the predictions are not precise enough, thereby jeopardizing the cross-checking capacity.

Another limitation of this approach is due to the fact that a feedback loop implies constraints on implementation and timing. Even in situations where the tracking process is capable of tracking slow moving and low RCS objects, a fundamental problem thus exists. More specifically, since radar signals are highly fluctuating and very disturbed by noise, the resulting video signal from a low RCS object may change a lot from scan to scan. Therefore, just smoothly moving the video blip from scan "n" to scan "n+1" would lead to a significant change from the final prediction of scan "n+1" to the actual video measurement of scan "n+1". This generally causes eye strain and cannot result in a smooth image over multiple scans due to the jump at scan changes. Such solution thus only helps the operator within a scan time interval and not over multiple scans.

## Summary of the invention

In order to address these and other problems, there is provided a method for enhancing video display as defined in the appended independent claim 1, and a device for enhancing video display as defined in appended claim 18. Preferred embodiments are defined in the dependent claims.

The invention accordingly provides a time-extrapolated easeful video enhancing device capable of creating a smooth and low eye-strain display video stream from radar signal data to help the radar operator assess the environment and more easily discern low RCS and slow moving objects which may be of interest.

Further advantages of the present invention will become clear to the skilled person upon examination of the drawings and detailed description. It is intended that any additional advantages be incorporated herein.

## Brief description of the drawings

Embodiments of the present invention will now be described by way of example with reference to the accompanying drawings in which like references denote similar elements, and in which:

- Figure 1 represents an exemplary architecture of a video surveillance system using a video enhancing device according to certain embodiments of the invention;
- Figure 2 shows the functional blocks of the video enhancing device of Figure 1;
- Figure 3 is a diagram illustrating the prediction for a single pixel object, according to the embodiments of the invention;
- Figure 4 is a functional flowchart of the enhancing method according to certain embodiments of the invention;
- Figure 5 illustrates the resolution scaled to range obtained according to certain embodiments of the invention; and
- Figure 6 is a diagram of a predicted image via backwards interpolation obtained according to certain embodiments of the invention.

Additionally, the detailed description is supplemented with Exhibit A. This Exhibit is placed apart for the purpose of clarifying the detailed description, and of enabling easier reference. It nevertheless forms an integral part of the description of the present invention. This applies to the drawings as well.

## Detailed description

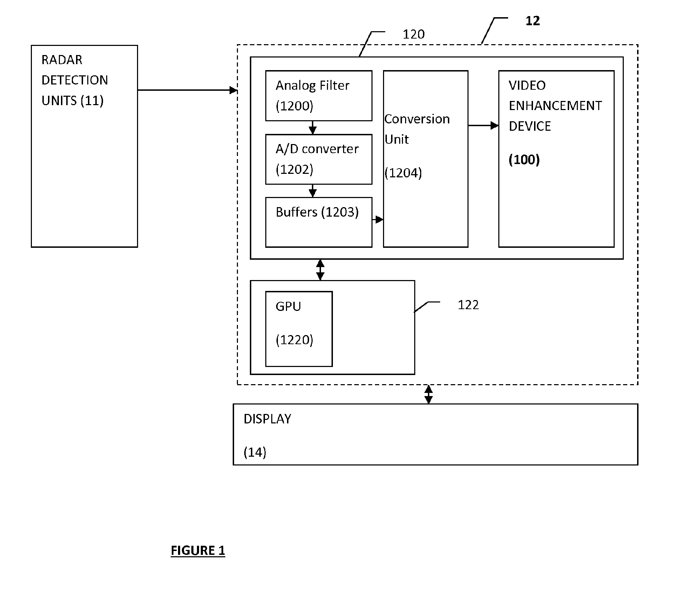

Referring to figure 1, there is shown an exemplary implementation of a video enhancing device 100 according to certain embodiments of the invention.

The video enhancing device 100 is configured to receive two images $I_n$ and $I_{n-1}$ corresponding to two successive scans captured by a video surveillance system 1. More specifically, the video enhancing device 100 is further configured to output the next scan $I_{n+1}$ from the two successive scans corresponding to the previous scan $I_{n-1}$ and the current scan $I_n$.

Even if the invention is not limited to such applications, the invention has particular advantages for the surveillance and detection of slow moving objects, such as for example a swimmer in the sea. In a preferred embodiment of the invention, the video surveillance system 1 may be a radar surveillance system. The following description will be made with reference to such a radar application. However, the skilled person will readily understand that the invention may be used in other applications such as for example in video surveillance systems, time lapse movies or video games systems The radar surveillance system 1 may include radar detection units 11 providing raw data from a surveillance area (e.g. a sea area) to a signal processing and imaging unit 12. The radar detection units 11 may comprise radar transmitters to send RF pulses in the surveillance area and radar receivers to receive the response provided by the reflected pulses (scan data). The radar transmitters and receivers interact with a scanning radar antenna respectively for transmitting the pulses and receiving the reflected pulses. The scanning radar antenna is placed at a location at which the surveillance area is to be monitored. The scan data are fed to the signal processing and rendering unit 12, in the form of an analog signal. The signal processing and rendering unit 12 then processes the signal received from the radar detection units 11 to generate a digitized representation of a target detected in the scanned area on a radar display 14.

The radar display 14 may be any suitable display such as, for example, a Liquid Crystal Display (LCD) or a Cathode Ray Tube (CRT) display.

The signal processing and rendering unit 12 includes a radar processor 120 for performing digital video processing. The radar processor 120 may be in communication with a graphics card 122, which may include its own processing element such as a graphics processing unit (GPU) 1220 for presenting selected image data processed at the graphics card 122 to be rendered at the display 14. The graphics card 122 may be configured to map a texture to a plurality of vertex buffers in order to generate a display of the scan data on the radar display 14.

The radar processor 120 may include an analog filter 1200 for filtering analogue radar signal feed received from the antenna and an analogue-to-digital converter 1202 for conversion of the filtered signal into a digital data stream. The converted digital data stream may then be stored in buffers 1203. Data from the buffers 1203 may then be transmitted to a conversion unit 1204 (scan converter) configured to convert the digital polar coordinate radar data, defined by range and bearing, into rectangular coordinate pixel radar image data (Cartesian coordinates), defined by x=range*cosinus(bearing), and y=range*sinus(bearing), for use by the graphics card 122. The graphics card 122 may then render the rectangular coordinate pixel radar image data in the display 14 based on a plurality of textures calculated by the GPU 1220, depending on the display mode.

Additionally, to allow control of radar image display by an operator, a graphical user interface (GUI) may be provided.

The video enhancing device 100 according to certain embodiments of the invention may process two images, such as Cartesian Images, corresponding to successive scans provided by the conversion unit 1204. By processing pairs of successive images $I_n$ and $I_{n-1}$ (real images) and the last provided predicted image $J_n$ (previous prediction), the video enhancing device 100 can create a smooth and low eye-strain display video stream from the radar signal data, which helps the radar operator to better assess the environment, the objects and targets in it.

To facilitate a better understanding of the detailed description, there follow definitions of certain notations corresponding to parameters used in relation with the described embodiments of the present invention :

- Scan n designates a set of signals covering the entire 360 degree bearing up to the maximum range, surrounding the radar detection units;

- k designates the intermediate image between the starting image of scan n and a predicted image of scan n+1;

- $N_k$ designates the total number of intermediate images between the image of scan n and a predicted image of scan n+1;

- f designates the intermediate fraction (between 0 and 1), used to calculate the prediction lengths at an intermediate image. *f* is calculated using equation $f = k/N_k$;

- $I_n$ designates a measured 2D image for a scan n of the radar;

- $D_n$ designates the displacement vector from $I_n$ to $I_{n-1}$ for all pixels in image $I_n$;

- $P_{n+1}$ designates the optical flow vector (i.e., predicted displacement) from $I_n$ to $J_{n+1}$ for all pixels in image $I_n$;

- $J_n^{(f)}$ designates a predicted 2D image for scan n-1 + f of the radar;

- $J_n$ is used to designate $J_n^{(1)}$; $J_n$ thus designates a predicted 2D image for scan n of the radar;

- $J_{n+1}^{(f)}$ designates a predicted 2D image for scan n+f of the radar;

- $F_{n+1}$ designates the "flow fading" vector from $J_n$ to $J_{n+1}$ for all pixels in image $J_n$;

- $L_{n+1}^{(f)}$ designates a predicted 2D image for scan n+f originating from $J_n$;

- $M_{n+1}^{(f)}$ designates a predicted 2D image for scan n+f created from linearly mixing intermediate 2D images $J_{n+1}^{(f)}$ and $L_{n+1}^{(f)}$;

Theoretically, $L_{n+1}^{(1)} = J_{n+1}^{(1)}$. However in practice this may not be the case. In addition, $L_{n+1}^{(f)} \neq J_{n+1}^{(f)}$ for all intermediate images where $f \neq 1$, since the starting images are both different.

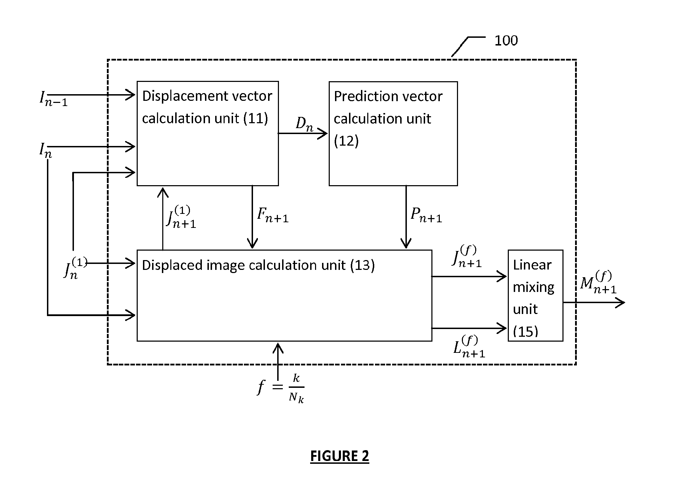

Figure 2 illustrates the architecture of the video enhancing device 100, according to certain embodiments of the invention.

The video enhancing device 100 is configured to calculate on per-pixel basis the optical flow in an image. As used herein, the optical flow designates the displacement in 2D for all pixels from image to image. According to the invention, the video input may be enhanced without additional information about image content (such as tracks or plots).

The video enhancing device 100 may use an algorithm based on the Lucas-Kanade image morphing function which is used twice.

The Lucas Kanade based algorithm may be the standard Lucas-Kanade or alternatively a variation of the Lucas-Kanade (LK) image morphing algorithm fitted to radar images. The variation of the LK algorithm will be referred to as "Range Dependent Accuracy Reduction" or "RADAR-LK" in the following description. The RADAR-LK algorithm is based on the standard LK algorithm but comprises additional steps to reduce the number of pixels for which the LK algorithm is calculated.

In the following description, the notation LK() will be used to designate both the standard LK algorithm and the RADAR_LK algorithm. The difference between both approaches will be detailed in the description. In the following description, both algorithms will be referred to commonly as "Lucas Kanade based algorithm" or "LK based algorithm". The standard LK algorithm is described for example in the article by by Simon Baker and Iain Matthews, "Lucas-Kanade 20 Years On: A Unifying Framework", International Journal of Computer Vision, February 2004, Volume 56, Issue 3, pp 221-255.

The video enhancing device 100 may comprise a displacement vector calculation unit 11 which on the LK based algorithm.

The displacement vector calculation unit 11 is called twice for each optical flow determination. In the first call, the displacement vector calculation unit calculates a linear backwards displacement vector $D_n$ per pixel from image $I_n$, corresponding to radar scan "n", to image $I_{n-1}$, corresponding to radar scan "n-1 ".

More specifically, the vector calculation unit 11 uses the LK based algorithm to determine the linear backwards displacement vector $D_n$ per pixel from image $I_n$ to image $I_{n-1}$ according to the following equation:

$$D_n = LK\ (I_n,\ I_{n-1})\qquad\text{(equation 1),}$$

where LK() designates the LK based algorithm (standard LK algorithm or Radar-LK algorithm).

The video enhancing device 100 further comprises a prediction vector calculation unit 12 to determine the prediction vector $P_{n+1}$ per pixel for scan n+1 based on the displacement vector $D_n$ determined from image $I_n$ to image $I_{n-1}$. The prediction vector calculation unit 12 extrapolates the prediction vector $P_{n+1}$ per pixel via a negation of the displacement vector $D_n$, according to equation 2:

$$P_{n+1} = -\ D_n\qquad\text{(equation 2)}$$

The video enhancing device 100 further comprises a displaced image calculation unit 13 which is called three times during the optical flow determination process. In the first call, the displaced image calculation unit 13 is called for predicting what the coming image $J_{n+1}$ should be from the prediction vector $P_{n+1}$. The displacement image generation unit 13 then uses a backwards linear extrapolation from $I_n$ according to equation 3:

$$J_{n+1} = INTERP2(I_n, P_{n+1})\qquad\text{(equation 3)}$$

In equation 3 INTERP2 designates the function corresponding to the standard 2D bilinear interpolation algorithm in which all pixels in $I_n$ are displaced by the 2D values in $P_{n+1}$.

In theory, the predicted image $J_{n+1}$ is equal to the actual next scan measured image $I_{n+1}$. However, in most cases, the predicted image $J_{n+1}$ will not be equal to the actual image $I_{n+1}$ due to heavy measurement fluctuations inherent to radar signals and non-constant movement of objects in the environment.

The new measurement $I_{n+1}$ can be used similarly to determine the next predicted image $J_{n+2}$:

- the new measurement $I_{n+1}$ is provided as an input together with the previous measurement $I_n$ to the vector displace-

ment calculation unit 11 to determine $D_{n+1}$,

- the prediction vector calculation unit 12 then determines $P_{n+2}$ from $D_{n+1}$

- the displaced image generation unit 13 estimates the full predicted image $J^{(1)}_{n+1}$ from $I_{n+1}$ and $P_{n+2}$.

The use of only the actual measured images $I_n$ and $I_{n+1}$ to determine $J_{n+2}$ serves as a sort of a negative feedback loop that keeps the processing stable and not diverging from the measurements.

In order to guarantee smooth transitions from the predicted image $J_{n+1}$ to the predicted image $J_{n+2}$, the displacement vector calculation unit 11 is called again to determine a second set of displacement vectors (referred to as flow fading vectors). The second set of displacement vectors $F_{n+1}$ is determined using the LK based algorithm between $J_{n+1}$ and $J_{n+2}$, according to equation 4 :

$$F_{n+1} = LK\,(J_{n+1},\,J_{n+2}) \quad \text{(equation 4)}$$

The video enhancing device 100 is capable of generating k intermediate images between the last updated predicted image $J_n$ and $J_{n+1}$. However, depending on the starting image (either $J_n$ or $I_n$), the intermediates are different and need to be blended to guarantee a smooth video output over successive scans.

The video enhancing device 100 therefore also includes a linear mixing unit 15 for perform linear mixing of intermediate images $J^{(f)}_{n+1}$ (originating from $I_n$) and $L^{(f)}_{n+1}$ (originating from $J_n$). The linear mixing unit 15 linearly mixes the images to render the combined intermediate outputted image $M^{(f)}_{n+1}$.

This linear mixing of intermediate predicted 2D images is performed in such a way that the image starts at $J_n$ according to equations 5 of Exhibit A. The linear mixing unit 15 calls twice the displaced image generation unit 13 in addition to the first call to calculate $J_{n+1}$ as described above. In the second call, the displaced image generation unit 13 is called for calculating the displaced intermediate image originating from the previous predicted image $J_n$:

$$L^{(f)}_{n+1} = INTERP2(J_n, f \cdot F_{n+1})$$

The resulting image $L^{(f)}_{n+1}$ is multiplied by $f$.

In the third call, the displaced image generation unit 13 is called for calculating the displaced image originating from the previous measured image $I_n$:

$$J^{(f)}_{n+1} = INTERP2(I_n, f \cdot P_{n+1})$$

The resulting image is multiplied by (1- f). The images thus obtained are the added according to equations 5 from Exhibit A and the result is displayed on a suitable display 14, such as a radar system screen in radar applications of the invention.

Accordingly, the predicted image from the previous prediction is weighed heavily at the first few intermediates, but gradually the prediction from the measurements is taking over. This guarantees a smooth transition and a smooth display video image from scan to scan.

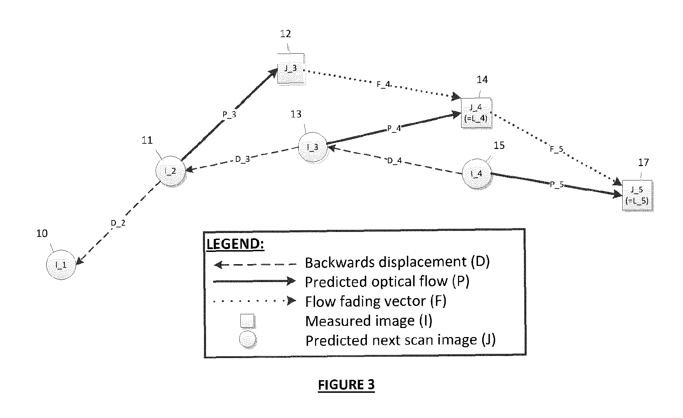

Figure 3 represents an exemplary sequence for a single object or pixel moving through a 2D space. In figure 3, the notation "_n" is used to indicate scan number "n" (for example, "J_4" designates the predicted image J of scan "4").

As illustrated in figure 3, even though the predicted images are overshot slightly, the use of the actual measured images (I_1, I_2, I_3, I_4) keeps the prediction process stable.

It should be noted that figure 3 corresponds to a theoretical approach where two estimated vectors (i.e., the flow fading F_n and prediction vectors P_n) lead ideally to the same predicted image J_n (that is, $J_n = L_n$ as described above). However, in practice they do not lead to the same predicted image and, in addition, the intermediate images are different since the starting images are different, hence the necessity of the weighed mixing performed by linear mixing unit 15 (according to equations 5).

In the example of figure 3, the predicted optical flow vector P_3 between scan 2 and 3 leads to the predicted image J_3 of scan 3 from measured image I_2 of scan 2.

The predicted optical flow vector P_4 between scan 3 and 4 leads to the predicted image J_4 of scan 4 from measured image I_3 of scan 3.

The flow fading vector F_4 between scan 3 and 4 leads to the predicted image L_4 from previous predicted image J_3 of scan 3.

At the full prediction (f = 1) the two predicted images L_4 and J_4 are theoretically equal.

The flow fading vector F_5 of scan 5 leads to the predicted image L_5 from previous predicted image J_4 of scan 4.

The predicted optical flow P_3 between scan 2 and 3 is determined from the backwards displacement D_2 between scan 2 and 1 from measured image I_2 to measured image I_1.

The predicted optical flow P_4 between scan 3 and 4 is determined from the backwards displacement D_3 between scan 3 and 2 from measured image I_3 to measured image I_2.

The predicted optical flow P_5 between scan 4 and 5 is determined from the backwards displacement D_4 between scan 4 and 3 from measured image I_4 to measured image I_3.

The flow fading vector F_4 between scan 3 and 4 is calculated from the predicted image J_4 of scan 4 and the predicted image J_3 of scan 3.

The flow fading vector F_5 between scan 4 and 5 is calculated from the predicted image J_5 of scan 5 and the predicted image J_4 of scan 4.

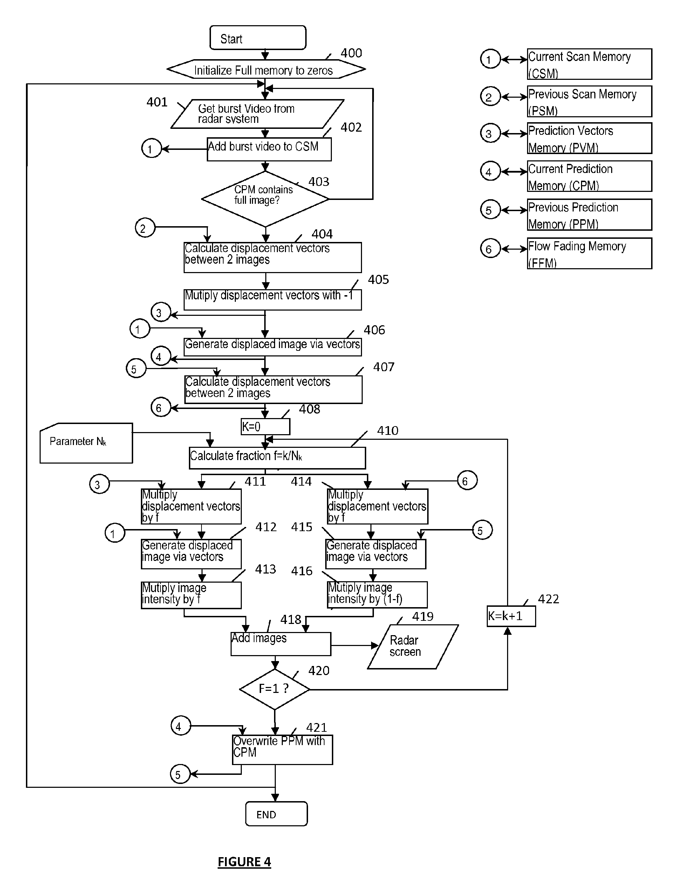

Referring to figure 4, there is shown a flowchart describing the steps performed to enhance a video rendered by a radar video surveillance system 10 according to certain embodiments of the invention. The video enhancing method is based on a double use of the LK based algorithm, and on the use of a predicted image to create predicted intermediate images.

In step 401, a burst video from the radar video surveillance system is received. The buffer memories 1203 are previously initialized to zeros at step 400.

In step 402, the burst video is added in a Current Scan Memory referred to as "CSM".

In step 403, it is determined if the current scan memory contains a full image. If so, step 404 is performed. Otherwise, the video enhancing device 100 waits until a full image $I_n$ is received.

In step 404, displacement vectors $D_n$ (pixel displacements) are calculated from image $I_{n-1}$ stored in a Previous Scan Memory (referred to as "PSM") and current image $I_n$ stored in Current Scan Memory.

In step 405, the displacement vectors $D_n$ are multiplied with coefficient "-1". This turns the displacement vectors into prediction vectors $P_{n+1}$. The prediction vectors $P_{n+1}$ are then stored in a Prediction Vectors Memory PVM.

In step 406, a displaced image $J_{n+1}$ is generated based on the starting image $I_n$ from current scan memory CSM and the set of displacement vectors $P_{n+1}$. The displaced image $J_{n+1}$ is then stored in a current prediction memory CPM.

In step 407, flow fading vectors $F_{n+1}$ are computed to determine the pixel displacements from the previous predicted image $J_n$ stored in a Previous Prediction Memory PPM to a newly predicted image $J_n$ stored in the CPM. The resulting displacement vectors are stored in a flow fading memory FFM.

For each index k of the intermediate image, k being initialized to 0 in step 408, and a corresponding number $N_k$ of intermediate images, step 409 is performed to calculate the ratio f= $k/N_k$.

The displacement vectors $P_{n+1}$ from Prediction Vectors Memory PVM are then multiplied by f in step 410 and a displaced image is generated from the resulting vectors in step 412 (INTERP2($I_n$,f.$P_{n1}$). The intensity of the displaced image thus obtained is multiplied by f in step 413.

Further, the displacement vectors $F_{n+1}$ from flow fading memory FFM are multiplied by f in step 414 and a displaced image (INTERP2($J_n$,f.$F_{n+1}$) is generated from the resulting vectors in step 415. The intensity of the displaced image thus obtained is multiplied by (1-f) in step 416.

The images obtained in step 413 and 416 are then added in step 418 and displayed on the radar display 14 in step 419.

If parameter f is not equal to 1 (step 420), k is incremented in step 422 and steps 410 to 418 are iterated.

Otherwise, if f is equal to 1, the Previous Prediction Memory (PPM) is overwritten with Current Prediction Memory (CPM) content, in step 421. The enhancement video method then returns to step 401.

Accordingly, the video enhancing method according to the embodiments of the invention is based on two calls of a displacement vectors calculation function, in step 404 and 407 (the function is implemented by the displacement vectors calculation unit 11 in figure 2). The first call is performed to determine the backwards displacement from image $I_n$ associating with scan n and image $I_{n-1}$ associated with scan n-1, according to equation 6 : $D_n(x,y) = LK (I_n(x,y), I_{n-1}(x,y))$. The backwards displacement calculation allows to quickly determine the predicted displacement based on a negation operation (multiplication by coefficient "-1"). The second call is performed to determine the forward pixel displacement (i.e. the flow fading vectors) from the predicted image $J_n$ of scan n and the next prediction $J_{n+1}$ of scan n+1, according to equation 7.1: $F_{n+1}(x,y) = LK (J_n(x,y), J_{n+1}(x,y))$. The term "forward" is used herein to highlight the fundamental difference in displacement directions $D_n(x,y)$ and $F_{n+1}(x,y)$.

The flow fading features involve a gradual mixing of the flow from the previous prediction to the new prediction via the flow fading vector F, and from the current image to the new prediction via the prediction vector P.

The LK based algorithm according to the described embodiments of the invention can thus be used to morph any two images in a radar video surveillance system, the RADAR-LK algorithm may be specifically used. The LK based algorithm as used by the video enhancing method (steps 404 and 407) further allows finding a per-pixel displacement such that two images can be morphed from one to the other. More specifically, it provides per pixel a displacement vector such that when all pixels are moved, the resulting image fits the second image. However, since the LK based algorithm is provided to determine sub-pixel displacements, a pyramidal and layered approach may be additionally applied according to the invention. More specifically, according to one aspect of the invention, the highest-resolution image is blurred a few times such that the real-world displacements the LK algorithm can handle fit within the pixel resolution. According to the embodiments of the invention, the core LK algorithm operates iteratively within a pyramid level to determine the displacement vectors with increasingly high accuracy. The maximum number of iterations is tunable and dependent on the processing available and the accuracy needed.

In certain embodiment of the invention, the LK-based algorithm may be the standard LK algorithm. In particular, three approaches of the LK standard algorithm can be applied by the displacement vector calculation function:

-    a single-level and single-iteration LK approach which refers to the way the pixel displacement vectors operate for a single iteration and on a single pyramidal level;

-    a single-level and iterative LK approach which refers to the way the accuracy increases by iteratively refining the found displacement vectors in the single-iteration LK scheme;

-    a multi-level and iterative LK approach which refers to the way the found displacement transfer to higher resolution levels and the way the highest-resolution optical flow is found.

The single level and single iteration LK approach allows calculation of displacement vectors. It relies on a single level and single iteration LK method that independently operates on every pixel. More specifically, it determines the sub-pixel displacement based on the specific pixel value and its surrounding pixel values. All pixels in the surrounding of the pixel of interest are said to be within the correlation window of the LK algorithm. This correlation window size is tunable and depends on the resolution and the object sizes, which depends on the specific radar. The correlation window may be a square window, or any other type of suitable windows.

The single level and single iteration LK method uses derivatives between pixels in the surrounding correlation window, in horizontal and vertical directions, between an image I and an image $\bar{I}$, where I designates the starting image and $\bar{I}$ designates the final image.

In an initial step, the derivative of I may be calculated in both Cartesian directions, according to equations 8 and 9 in which x and y represent pixel coordinates and the subscripts indicate the direction of the derivative. With the above derivative images, a spatial derivative matrix G is constructed per pixel position, according to equation 10. In equation 10, (px, py) designates the position of any specific pixel, and w designates half of the window size in pixels (for example, a 5x5 window would mean w= 2).

Then, the intensity/value difference between image I and image $\bar{I}$ is calculated according to equation 11.

Another vector called "image mismatch vector" is constructed according to equation 12.

At this point, the optical flow vector $\overline{\delta(x, y)}$ can be calculated according to equation 13.

The optical flow vector or displacement vector is also denoted $D_n(x, y)$ or $F_n(x,y)$ in the present description, depending on the call of the function (step 404 or 407 of figure 4).

To make the estimation function more accurate, an iterative approach may be taken instead of the single-layer, single iteration LK method.

Since the estimation is quite coarse, via multiple iterations, a better estimate can be obtained using a single level, iterative LK method.

Iteratively, the refinement lies in equation 11 where, at every iteration, the new difference image is taking into account the found displacements $\overline{\delta(x, y)}$ into the image $\bar{I}$, and displacing it, which in theory would mean I and $\bar{I}$ are equal, and the resulting difference image is zero for all pixels. Thus, when using an iterative approach, the equation for the difference image changes is given by equation 14.

In complement, the new optical flow vectors may be added to the already existing ones from the previous iteration, thus gradually converging to a minimized error.

A process parameter may be used to define when to stop the iterative process. The process parameter may be defined depending on the noisiness of the images and the needed accuracy. Comparing the difference image between two highly fluctuating images does not need a high accuracy but merely a roughly estimation of the optical flow vectors, and the iteration process may be limited or even omitted. This then ends the single layer, iterative LK method.

The standard LK algorithm can only be used to find subpixel displacements for a single layer. A problem occurs when there is a need to find larger displacements, such as for a radar system having a very low data refresh rate (at least compared to camera-type systems). In such situation, it is proposed to apply the pyramidal or multi-level breakdown of the images from a high-resolution to a lower resolution, according to the third approach. A pyramidal implementation of Lucas Kanade algorithm is described for example in J.-Y. Bouguet, "Pyramidal implementation of the lucas kanade feature tracker", Intel Corporation, Microprocessor Research Labs, 2000.

In the multi-level and iterative LK approach, the pyramidal breakdown of the images is applied from a high-resolution to a lower resolution. The pyramidal breakdown is created via image convolution with a blurring matrix K and a down-sampling operation. These operations result in a blurred image with pixel values consisting of a combination of intensities from its neighbors. The pixel resolution is reduced by a factor 2, going through the layers in the pyramid.

To go from an image $I^L$ at level L to an image $I^{L-1}$ at level L-1, the multi-level and iterative LK method initially performs the convolution of image $I^L$ with the blurring matrix K. K is defined according to equation 15.

With the defined blurring matrix K, the image at level L can be constructed according to equation 16, where $I_{Blur}^L(x,y)$ is obtained from the convolution of $I^L$ and M. At this stage, $I_{Blur}^L(x,y)$ designates a blurred image with the same resolution as image $I^L$. To downsample and create the lower level image $I^{L-1}$, every second pixel per row and column is taken. This reduces the resolution by a factor of 2 and terminates the process. The lower level image $I^{L-1}$ is obtained according to equation 17, where $N_x^L$ (or respectively $N_y^L$) designates the number of pixels in level L in the x (or respectively y) direction.

When stepping down as described above, a pyramid consisting of reduced resolution images can be constructed. The LK method thus obtained can work on every level, starting with the lowest-resolution image. The number of levels L required in the pyramid depends on the starting resolution in combination with the number of pixels objects that are expected to move in the radar video.

The initial optical flow vectors to start the estimation with are then equal to twice the found optical flow vectors at a lower level according to equation 18.

The initial values are used in equation 14 to start the iterative LK for a specific pyramidal level.

The displacement vector function may use the optimized RADAR-LK approach (Range Dependent Accuracy Reduction-LK), as the LK-based algorithm, to overcome the problems related to the accuracy with which the optical flow vectors are calculated for all pixels. For a radar system, the measured polar resolution depends on the size of the object, and the design of the system. However, the Cartesian resolution (i.e., in x and y) does depend on the range and the bearing of the object. This implies that the accuracy with which the optical flow vectors are to be calculated at shorter ranges for a radar system must be higher than at large ranges. This is because the same object, being seen by a radar system at short range, will be displayed on a Cartesian grid by a far smaller form ("blob") than at long ranges. The accuracy of the measurement thus decreases with range, and so is the needed accuracy for the optical flow vectors.

The inventor thus modified the pyramidal approach to take into account the radar-specific video features. As the desired optical flow vector accuracy reduces with range and it is not required to process all pixels similarly, processor load can be reduced dramatically, when only refining the pixels in subsequently smaller boxes around the radar position.

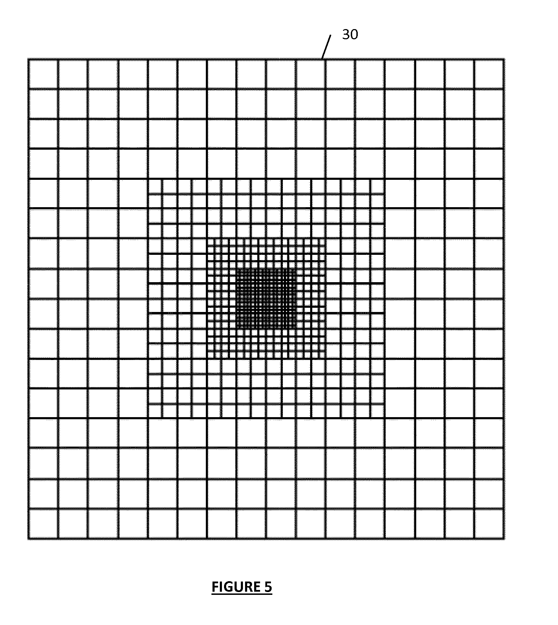

Figure 5 illustrates the resolution variation across an image. As shown in Figure 5, the resolution is halved every doubling in range (i.e., along the Cartesian axes). In order to end up with the highest display resolution for the entire image, the found optical flow vectors in the low-resolution areas are multiplied by 2L and calculated by interpolation for all highest-resolution pixels. That is, for a 4 level pyramidal system, an optical flow vector $\delta(x,y)_{L=4}$ is immediately converted to an optical flow vector at the highest resolution level according to equation 19.

The number of pixels for which the pyramidal LK algorithm needs to be calculated is thus significantly reduced. For example, for a radar display video grid, the cell sizes are defined to be square. In the lowest resolution (i.e., the lowest pyramidal level), the number of pixels is $N.N = N^2$. For the pyramidal LK approach, when moving to a higher resolution, the number of pixels grows by a factor of 4. This leads to a total number of pixels $N_{total}^{Normal}$ to evaluate according to equation 20. For a 4 level system as shown in figure 5, this would lead to a total number $N_{total}^{Normal}$ according to equation 21. In equation 20, $N_{levels}$ designates the number of layers in the pyramid of LK. Every level in this pyramid has half the resolution of the next level. A lower resolution implies that one pixels is larger. Therefore large pixel displacements can be found at the lower resolution levels. These coarse large displacements are now fine-tuned at the next higher resolution image. This continues up to the highest level (that is, the original image). Further, N designates the number of pixels in one dimension in the lowest resolution image in the pyramid for a square image (the total amount of pixels in the lowest-resolution level being N*N).

The total number of pixels number grows rapidly with number of pyramidal levels and the number of pixels in the lowest resolution level. However, with the RADAR-LK approach according to the invention, the total number of pixel

$N_{total}^{RADAR-LK}$ as given by equation 22 is improved. According to the preceding example, this leads to a total number of pixels $N_{total}^{RADAR-LK}$ to process equal to $4N^2$, according to equation 23.

It should be noted that this number does not increase with the number of levels squared anymore but just linearly increases, which can be managed more easily. Especially, since the RADAR-LK process is performed twice (step 404 and 407 of figure 4), the processing gain obtained by using RADAR-LK over the standard LK is still increased.

The optimized LK algorithm (RADAR-LK) thus improves the standard LK algorithm by reducing processing and data loads needed for practical reasons and/or based on data density inherent to radar systems.

According to one aspect of the invention, a displaced image generation function (implemented by the displaced image generation unit 13 of figure 2) is called 3 times during the processing of a single scan respectively at steps 406, 412, and 415:

- The first call is performed to find the predicted image from two measured images ($J_{n+1}$ = INTERP2($I_n$,$P_{n+1}$)),
- The second call and the third call are performed the calculation of the flow fading vector to create the wanted intermediate images in a loop (INTERP2($I_n$,f.$P_{n+1}$) and INTERP2($J_n$,f.$F_{n+1}$)).

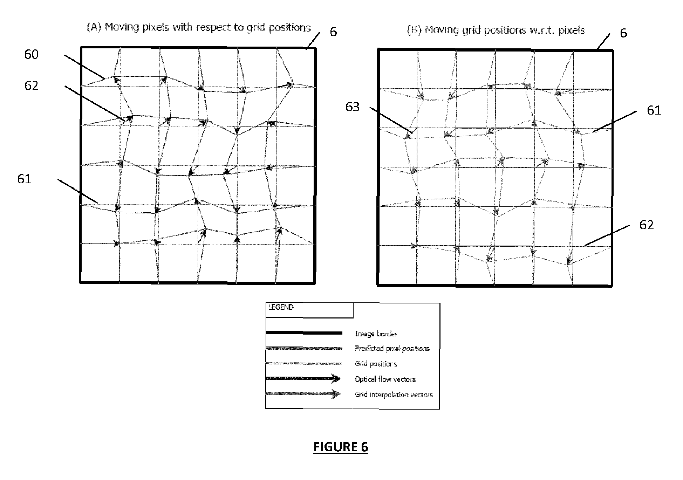

Figure 6 illustrates the creation of a predicted image via backwards interpolation. Figure 6 comprises a part A which represents the movements of pixels with respect to grid positions and a part B which represents the movements of grid positions with respect to pixels (part B). In figure 6, reference 60 designates the predicted pixel positions, reference 61 designates the grid positions, reference 62 designates the optical flow vectors (in the form of arrows) and reference 63 designates the grid interpolation vectors (in the form of arrows). Reference 6 represents the image border.

When a prediction vector is available for all pixels in an image, the pixels are moved to their predicted locations as shown in part A of figure 6. However, in practice the display grid remains the same, and only the intensity map may change. The intensity for all grid positions may be determined from the nearest neighbors one pixel at a time. However, since the pixels are moved to different locations, the distances to the neighbors per pixel are not equal. This leads to a very time consuming looping process. As shown in part A of figure 6, the pixel displacements indicated with arrows 62 result in a distortion of the grid, which makes a linear interpolation at the grid positions 61 with respect to the morphed red grid time consuming due to the non-uniformity of the morphed grid. It is desirable to find the intensity at the grid positions 61 via a straightforward bilinear 2D interpolation, which can be performed by straightening the displaced grid, and interpolating at the normal grid positions minus the optical flow vectors per grid position. Part B of figure 6 shows the type of backward interpolation of the grid positions which renders the intensity values at the real grid positions. In part B, the grid positions 61 have moved in the opposite direction. This is shown by the fact that the flow vectors in part A are 180 degrees rotated with respect to the flow vectors in part B. When performing a straightforward bilinear 2D interpolation on the grid positions 61 of part B, the actual intensities at the straight grid positions 61 of part A of figure 6 are found.

The video enhancing device according to the embodiments of the invention obviates the need for a feedback loop between the tracking and the display video, thereby removing the constraint of a perfectly functioning tracking and the need for specific hardware and/or software to implement the feedback loop. Further, the video enhancing device 100 according to the invention does not require track information for performing the display video prediction from scan n to scan n+1. The proposed video enhancing device can work stand-alone with only the display video images of two subsequent scans as an input, which therefore greatly reduces complexity.

In addition, the video enhancing device according to the invention provides a smooth display video image over multiple scans while still using the highly fluctuating measured - real - display video images as an input. It eliminates fluctuations from scan to scan, thus removing radar operator eye strain, increasing situational awareness, and optimizing the ability to distinguish low RCS and slow moving targets.

The proposed video enhancing device can work stand-alone with only the display video images of two subsequent scans as an input.

Even if the invention has particular advantages for a radar system application, it is not limited to such application. In particular, the invention may be applied to video surveillance systems, time lapse movies or video games. As the need for any prior knowledge on the content of any image/environment is not required, the invention can be used on any stream or set of images. The invention can be also implemented on any image rendering system for which the time interval between subsequent images is too large to create a smooth video stream.

The invention can take the form of an embodiment containing both hardware and software elements implementing the invention.

The invention can also take the form of a computer program product accessible from a computer-usable or computer-readable medium providing program code for use by or in connection with a computer or any instruction execution system. For the purposes of this description, a computer-usable or computer readable medium can be any apparatus that can contain, store, communicate, propagate, or transport the program for use by or in connection with the instruction execution system, apparatus, or device.

The foregoing is considered as illustrative only of the principles of the invention. Further, since numerous modifications and changes will readily occur to those skilled in the art, it is not desired to limit the invention to the exact construction and operation shown and described, and accordingly, all suitable modifications and equivalents may be resorted to, falling within the scope of the invention. For instance, the video enhancing device 100 may alternatively use a non-linear image mixing scheme, or set the range borders of the RADAR-LK method at different distances. Further, it should be noted that although the displacement vector calculation unit 11 may be based on the RADAR-LK algorithm to reduce computational load, when processing power is relatively high (to be able to process high resolution pixels at all levels), in situations where the processing power does not need to be conserved, the displacement vector calculation unit 11 can be based on the standard Lucas Kanade algorithm alternatively.

### EXHIBIT A

**Equation 1**

$$D_n = LK(I_n, I_{n-1}) \qquad \text{(eq. 1)}$$

**Equation 2**

$$P_{n+1} = -D_n \qquad \text{(eq. 2)}$$

**Equation 3**

$$J_{n+1} = I_n + P_{n+1} \qquad \text{(eq. 3)}$$

**Equation 4**

$$F_{n+1} = LK(J_{n+1}, J_{n+2}) \qquad \text{(eq. 4)}$$

**Equation 5**

$$J_{n+1}^{(f)} = (1 - f) \cdot INTERP2(J_n, f \cdot F_{n+1}) + f \cdot INTERP2(I_n, f \cdot P_{n+1}) \qquad \text{(Eq. 5.1)}$$

$$J_{n+2}^{(k)} = \left(\frac{N_k-k}{N_k}\right) \cdot \left(J_{n+1} + \frac{k}{N_k}.F_{n+1}\right) + \frac{k}{N_k} \cdot \left(I_{n+1} + \frac{k}{N_k}.P_{n+2}\right) \qquad \text{(Eq. 5.2)}$$

**Equation 6**

$$Dn(x,y) = LK(I_n(x,y), I_{n-1}(x,y)) \qquad \text{(Eq.6)}$$

**Equation 7**

$$F_{n+1}(x,y) = LK\big(J_n(x,y), J_{n+1}(x,y)\big) \qquad \text{(Eq 7.1)}$$

$$F_{n+2}(x,y) = LK\big(J_{n+1}(x,y), J_{n+2}(x,y)\big) \qquad \text{(Eq 7.2)}$$

**Equation 8**

$$I_x(x,y) = \frac{I(x+1,y) - I(x-1,y)}{2} \qquad \text{(eq. 8)}$$

**Equation 9**

$$I_y(x,y) = \frac{I(x,y+1) - I(x,y-1)}{2} \qquad \text{(eq. 9)}$$

**Equation 10**

$$G = \sum_{x=p_x-w}^{p_x+w} \sum_{y=P_y-w}^{p_y+w} \begin{bmatrix} I_x^2(x,y) & I_x(x,y)I_y(x,y) \\ I_x(x,y)I_y(x,y) & I_y^2(x,y) \end{bmatrix} \qquad \text{(eq. 10)}$$

**Equation 11**

$$\Delta I(x,y) = I(x,y) - \tilde{I}(x,y) \qquad \text{(eq. 11)}$$

**Equation 12**

$$\overline{b(x,y)} = \sum_{x=p_x-w}^{p_x+w} \sum_{y=P_y-w}^{p_y+w} \begin{bmatrix} \Delta I(x,y) I_x(x,y) \\ \Delta I(x,y) I_y(x,y) \end{bmatrix} \qquad \text{(eq. 12)}$$

**Equation 13**

$$\overline{\delta(x,y)} = G^{-1} \cdot \overline{b(x,y)} \qquad \text{(eq. 13)}$$

**Equation 14**

$$\Delta I(x,y) = I(x,y) - \tilde{I}\left(x + \overline{\delta_x(x,y)}, y + \overline{\delta_y(x,y)}\right) \qquad \text{(eq. 14)}$$

**Equation 15**

$$M = \begin{bmatrix} 1/4 \\ 1/2 \\ 1/4 \end{bmatrix} \cdot [1/4 \quad 1/2 \quad 1/4] = \frac{1}{16} \begin{bmatrix} 1 & 2 & 1 \\ 2 & 4 & 2 \\ 1 & 2 & 1 \end{bmatrix} \qquad \text{(eq. 15)}$$

**Equation 16**

$$I_{blur}^L(x,y) = I^L \otimes M \qquad \text{(eq. 16)}$$

**Equation 17**

$$I^{L-1}(x,y) = I_{blur}^L\left([2:2:N_x^L], [2:2:N_y^L]\right) \qquad \text{(eq. 17)}$$

**Equation 18**

$$\overline{\delta(x,y)}_{init}^L = 2.\overline{\delta(x,y)}_{found}^{L-1} \qquad \text{(Eq.18)}$$

**Equation 19**

$$\overline{\delta(x,y)}_{L=1} = 2^{L-1}.\overline{\delta(x,y)}_{L=4} \qquad \text{(Eq.19)}$$

**Equation 20**

$$N_{total}^{normal} = \sum_{L=1}^{N_{levels}}(2^{L-1}.N)^2 \qquad \text{(eq.20)}$$

**Equation 21**

$$N_{total}^{normal} = \sum_{L=1}^{4}(2^{L-1}.N)^2 = N^2((2^0)^2 + (2^1)^2 + (2^2)^2 + (2^3)^2) = 85N^2 \quad \text{(eq. 21)}$$

**Equation 22**

$$N_{total}^{RADAR-LK} = \sum_{L=1}^{N_{levels}} N^2 = N_{levels}.N^2 \qquad \text{(eq.22)}$$

**Equation 23**

$$N_{total}^{RADAR-LK} = \sum_{L=1}^{4} N^2 = 4.N^2 \qquad \text{(eq. 23)}$$

**Claims**

**1.** A method for enhancing video display of a video surveillance system, wherein said method comprises :

a. receiving a first video image $I_{n-1}$ and a second video image $I_n$ corresponding to a previous scan n-1 and a current scan n of said video surveillance system,

b. determining a backwards displacement vector $D_n$ from image $I_n$ associating with scan n to image $I_{n-1}$ associated with scan n-1;

c. determining a predicted image $J_{n+1}$ for scan n+1 based on the backward displacement vector $D_n$ and on the image $I_n$ corresponding to the current scan n, the method comprising displaying an image based on said predicted image.

**2.** The method of claim 1, wherein it further comprises :

i. iterating step a. to c. for scan n and n+1, which provides a predicted image $J_{n+2}$ for scan n+2, and:

ii. determining a flow fading vector $F_{n+2}$ from said predicted image $J_{n+1}$ for scan n+1 and said predicted image $J_{n+2}$ for scan n+2;

iii. generating a first displaced image from said forward displacement vector $F_{n+2}$ and the predicted image $J_{n+1}$ for scan n+1, and a second displaced image from image $I_{n+1}$ and the backward displacement vector $D_{n+1}$ from image $I_{n+1}$ to image $I_n$,

wherein said displayed image results from the addition of said displaced images obtained in step iii., weighted by a weighting factor.

**3.** The method of claim 2, wherein each step b. and ii. comprises calling a displacement vector calculation function $LK(I,\tilde{I})$ from a starting image I to a final image $\tilde{I}$, where LK( , ) designates a function based on Lucas-Kanade function for computing an optical flow vector $\overline{\delta(x, y)}$.

**4.** The method of claim 3, wherein the displacement vector calculation function is based on a single level and single iteration Lucas-Kanade process that independently operates on every pixel, the vector calculation function comprising calculating derivatives in a pixel surrounding a predefined correlation window, in both horizontal and vertical directions, between the image I and image $\tilde{I}$, where I designates the starting image and $\tilde{I}$ designates the final image.

**5.** The method of claim 4, wherein the displacement vector calculation function comprises :

- Calculating the derivative of I in both horizontal and vertical directions,
- Based on the derivative images obtained, constructing a spatial derivative matrix G per pixel position,
- Calculating the intensity difference between image I and image $\tilde{I}$,
- Constructing an image mismatch vector based on the intensity difference between image I and image $\tilde{I}$, and
- determining the optical flow vector $\overline{\delta(x, y)}$ from said spatial derivative matrix G and said image mismatch vector.

**6.** The method of any preceding claim 4 and 5, wherein the displacement vector calculation function comprises iterating the calculation of the optical flow vector $\overline{\delta(x, y)}$, each iteration taking into account the found displacements $\overline{\delta(x, y)}$ into the image $\tilde{I}$ for the calculation of the intensity difference.

**7.** The method of claim 6, wherein the optical flow vectors obtained at a current iteration are added to the already existing ones from the previous iteration.

**8.** The method of any preceding claim 6 and 7, wherein it further comprises predefining a termination parameter for stopping the iterations.

**9.** The method of claim 8, wherein the termination parameter is defined depending on the noisiness of the images and the target accuracy.

**10.** The method of claim 3, wherein the vector calculation function is based on pyramidal breakdown of the images into a number of levels from a high-resolution to a lower resolution, the pyramidal breakdown being constructed iteratively based on image convolution with a blurring matrix K and a down-sampling operation, which provides a blurred image with pixel values consisting of a combination of intensities from its neighbors.

**11.** The method of claim 10, wherein the vector calculation function comprises performing the convolution of image $I^L$ at level L with the blurring matrix K, which provides a blurred image at level L with the same resolution as image $I^L$, and down-sampling and creating the lower level image $I^{L-1}$ at level L-1 from the blurred image at level L and the number of pixels in level L in the each direction.

**12.** The method of any preceding claim 10 and 11, wherein the number of levels L required in the pyramid depends on the starting resolution in combination with the number of pixels objects that are expected to move in the video surveillance system.

**14.** The method of any preceding claim 10 to 12, wherein in the first iteration of the vector calculation function, the optical flow vectors are taken as equal to twice the found optical flow vectors at a lower level.

**15.** The method of any preceding claim 10 to 14, wherein the video surveillance system is a radar system and the images are substantially square, and wherein the Lucas Kanade based function is calculated on a total number of pixels $N_{total}^{RADAR-LK} =$

$N_{levels}.N^2$, where N designates the number of pixels in one dimension in the lowest resolution image in the Lucas Kanade pyramid, and $N_{levels}$ designates the number of layers in the Lucas Kanade pyramid.

**16.** The method of any preceding claim, wherein it comprises calling a displaced image generation function for calculating a displaced image based on an initial image once in step ii) for calculating said predicted image and twice in step iii. for calculating each displaced image.

**17.** The method of any preceding claim, wherein the weighting factor is the ratio between a parameter f= 1/k where k represents the index of the intermediate image and $N_k$ represents the total number of intermediate images.

**18.** A video enhancing device (100) for enhancing video display of a video surveillance system, wherein the device comprises:

- a displacement vector calculation unit (11) configured to determine :

o a backwards displacement vector $D_n$ from a first video image $I_{n-1}$ corresponding to a previous scan n-1 of said video surveillance system and a second video image $I_n$ corresponding to a current scan n of said video surveillance system;
o a backwards displacement vector $D_{n+1}$ from the second video image $I_n$ corresponding to scan n of said video surveillance system and a third video image $I_{n+1}$ corresponding to a next scan n+1 of said video surveillance system;
o a displaced image calculation unit (13) configured to determine a predicted image $J_{n+1}$ for scan n+1 based on the backward displacement vector $D_n$ and on the image $I_n$ corresponding to the current scan n, and a predicted image $J_{n+2}$ for scan n+2 based on the backward displacement vector $D_{n+1}$;
the device further comprising displaying an image based on said predicted image.

**19.** The device of claim 17, wherein it further comprises :

- making a second call to the displacement vector calculation unit (11) to determine a flow fading vector $F_{n+2}$ from said predicted image $J_{n+1}$ for scan n+1 and said predicted image $J_{n+2}$ for scan n+2;
- making two additional calls to the displaced image calculation unit (13) for generating a first displaced image from said forward displacement vector $F_{n+2}$ and the predicted image $J_{n+1}$ for scan n+1, and a second displaced image from image $I_{n+1}$ and the backward displacement vector $D_{n+1}$ from image $I_{n+1}$ to image $I_n$,
said displayed image resulting from the addition of said displaced images provided by displayed calculation unit (13), weighted by a weighting factor.

**20.** The device of claim 18, wherein displacement vector calculation unit (11) is based on the Lucas-Kanade function.

**12**

**120**

RADAR
DETECTION
UNITS (11)

Analog Filter
(1200)

A/D converter
(1202)

Buffers (1203)

Conversion
Unit

(1204)

VIDEO
ENHANCEMENT
DEVICE

**(100)**

GPU

(1220)

**122**

DISPLAY

(14)

**FIGURE 1**

**FIGURE 2**

**FIGURE 3**

**FIGURE 4**

30

**FIGURE 5**

(A) Moving pixels with respect to grid positions

(B) Moving grid positions w.r.t. pixels

| LEGEND | |
|---|---|
| | Image border |
| | Predicted pixel positions |
| | Grid positions |
| | Optical flow vectors |
| | Grid interpolation vectors |

**FIGURE 6**

Europäisches
Patentamt

European
Patent Office

Office européen
des brevets

# EUROPEAN SEARCH REPORT

Application Number

EP 13 19 7557

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/054211 A1 (EDELSON STEVEN D [US] ET AL) 9 May 2002 (2002-05-09) | 1,18,20 | INV. G06T7/20 |
| A | * abstract * <br> * paragraphs [0005], [0017], [0026] - [0032] * | 2-17,19 | |
| X | US 2005/286764 A1 (MITTAL ANURAG [US] ET AL) 29 December 2005 (2005-12-29) | 1,18,20 | |
| A | * abstract; figure 4 * <br> * paragraph [0018] * | 2-17,19 | |
| A | EP 0 851 240 A2 (NIPPON TELEGRAPH & TELEPHONE [JP] NIPPON TELEGRAPH AND [JP]) 1 July 1998 (1998-07-01) <br> * abstract * <br> * page 1, line 56 - page 2, line 9 * | 1,18 | |
| A | US 2004/252230 A1 (WINDER SIMON ANTHONY JOHN [US]) 16 December 2004 (2004-12-16) <br> * abstract * | 1,18 | |

TECHNICAL FIELDS
SEARCHED      (IPC)

G06T
G01S
H04N
G06K
G08G
G01C

The present search report has been drawn up for all claims

| Place of search | Date of completion of the search | Examiner |
|---|---|---|
| Munich | 19 May 2014 | Rimassa, Simone |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 13 19 7557

This annex lists the patent family members relating to the patent documents cited in the above-mentioned European search report.
The members are as contained in the European Patent Office EDP file on
The European Patent Office is in no way liable for these particulars which are merely given for the purpose of information.

19-05-2014

| Patent document cited in search report | | Publication date | Patent family member(s) | | Publication date |
|---|---|---|---|---|---|
| US 2002054211 | A1 | 09-05-2002 | US 2002054211 A1 | | 09-05-2002 |
| | | | WO 0237856 A1 | | 10-05-2002 |
| US 2005286764 | A1 | 29-12-2005 | US 2005286764 A1 | | 29-12-2005 |
| | | | US 2008130952 A1 | | 05-06-2008 |
| EP 0851240 | A2 | 01-07-1998 | DE 69735158 T2 | | 28-09-2006 |
| | | | EP 0851240 A2 | | 01-07-1998 |
| | | | EP 1602941 A2 | | 07-12-2005 |
| | | | EP 1607765 A2 | | 21-12-2005 |
| | | | EP 1811317 A2 | | 25-07-2007 |
| | | | MY 117870 A | | 30-08-2004 |
| | | | US 6128578 A | | 03-10-2000 |
| US 2004252230 | A1 | 16-12-2004 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SIMON BAKER ; LAIN MATTHEWS.** Lucas-Kanade 20 Years On: A Unifying Framework. *International Journal of Computer Vision,* February 2004, vol. 56 (3), 221-255

- **J.-Y. BOUGUET.** Pyramidal implementation of the lucas kanade feature tracker. Intel Corporation, Microprocessor Research Labs, 2000